# EUROPEAN PATENT APPLICATION

(11) **EP 3 370 014 A1**
(43) Date of publication of application: **05.09.2018**
(21) Application number: 16889944.1
(22) Date of filing: 13.12.2016
(51) Int. Cl.: F25B 1/00

(54) **REFRIGERATION CYCLE DEVICE**

(30) Priority: 08.02.2016 JP 2016022037
(71) Applicant: Mitsubishi Heavy Industries Thermal Systems, Ltd., Minato-ku, Tokyo 108-8215 (JP)
(72) Inventor: MITOMA, Keisuke, Tokyo 108-8215 (JP); ENYA, Atsushi, Tokyo 108-8215 (JP); ISOZUMI, Shinichi, Tokyo 108-8215 (JP); KURACHI, Masaya, Tokyo 108-8215 (JP); YOSHIDA, Junichi, Tokyo 108-8215 (JP)
(74) Representative: Henkel, Breuer & Partner
(86) International application number: PCT/JP2016/087008
(87) International publication number: WO 2017/138243

(57) **Abstract**

A refrigeration cycle device equipped with: a branched pipe (81) for cooling that forms a bypass for causing some of the coolant between an outdoor heat exchanger and an indoor heat exchanger in a refrigeration cycle (45) to flow to the intake side of a compressor; a cooling jacket (83) that cools a power element (85) provided in an electrical circuit for controlling the operation of the compressor (13), by using some of the coolant, and is provided along the branched pipe (81) for cooling; a throttling valve (87) provided on only the upstream side of the cooling jacket (83) in the branched pipe (81) for cooling; an element temperature detector (91) for detecting the temperature of the power element (85); and a control unit (89) for executing an opening control or closing control of the throttling valve (87) on the basis of the detected temperature of the element temperature detector (91). As a result, it is possible to prevent excessive cooling of a power element and prevent condensation from forming thereon, while simplifying the configuration thereof and suppressing a decline in operating efficiency.

## Description

### Technical Field

The present invention relates to a refrigeration cycle device.

### Background Art

In an air conditioner in which refrigerant circulates to perform a vapor compression refrigeration cycle, electrical circuits such as inverter circuits are mounted in order to control an operating state of an electric motor of a compressor. For such an inverter circuit, a power device generating high-temperature heat has been generally used. And in an air conditioner in the related art, a unit configured to cool the power device is provided so as to prevent a temperature of the power device from exceeding a temperature at which the power device is operable.

In the related art, in Patent Document 1, for example, a refrigeration device is described, which includes: a refrigerant circuit including a main circuit in which a compressor, a heat-source-side heat exchanger, an expansion mechanism, and a utilization-side heat exchanger are connected together to perform a refrigeration cycle, and a branch circuit which branches a part of high-pressure liquid refrigerant flowing through the main circuit and leads the part of high-pressure liquid refrigerant from a high-pressure part of the main circuit to a part of the main circuit having a pressure lower than that of the high-pressure part; a power supply device including a power device and configured to supply power to a driver of a component of the refrigerant circuit; and a cooler connected to the branch circuit and configured to cool the power device by using refrigerant flowing through the branch circuit. The refrigeration device includes an adjusting mechanism configured to adjust a state of refrigerant flowing through the branch circuit and adjust a temperature of refrigerant passing through the cooler to a target temperature.

In another example in the related art, in Patent Document 2, a refrigeration device is described, which includes: a compressor; a condenser; an expansion valve; an evaporator; a power supply device configured to supply electric power to a motor to drive the compressor; and a cooler configured to cool the power supply device by using refrigerant flowing out from the condenser. The refrigeration device includes a temperature range detecting unit configured to detect a temperature range in which condensation may occur in the power supply device, and a control unit configured to increase a temperature of the refrigerant flowing at an outlet of the condenser upon receiving a detection signal from the temperature range detecting unit.

### Prior Art Documents

### Patent Document

Patent Document 1: JP 5516602B
Patent Document 2: JP 2014-089024 A

### Summary of the Invention

### Problem to be Solved by the Invention

The refrigeration device described in Patent Document 1 includes: a throttle mechanism (a throttle valve) provided on an upstream side of the cooler in the branch circuit; and a throttle valve that is connected to a downstream side of the cooler in the branch circuit and is capable of adjusting an opening degree. This configuration includes a lot of valves to be operated, which may lead to complication, thereby increasing causes of failure and possibility of failure.

The refrigeration device described in Patent Document 2 increases a temperature of the refrigerant flowing at an outlet of the condenser. A temperature rise of the condenser, however, increases a pressure. This may lead to deterioration of operational efficiency as a refrigeration device. Increasing a temperature of the condenser may change an operation point of the refrigeration cycle. This may also change a temperature on a side of an indoor unit and a temperature of blowing from an indoor unit during cooling, thereby temporarily deteriorating comfort on the side of the indoor unit.

The present invention solves the above-described problems and has an object of providing a refrigeration cycle device capable of simplifying configuration and suppressing deterioration of operational efficiency, while preventing overcooling or condensation on a power device.

### Means for Solving the Problem

In order to achieve the above-described object, a refrigeration cycle device according to a first aspect of the present invention includes a refrigerant circuit including a compressor, a heat-source-side heat exchanger, an expansion valve, and a utilization-side heat exchanger connected via piping, the refrigerant circuit being configured to circulate refrigerant; a branching piping for cooling configured to allow a part of refrigerant between the heat exchangers in the refrigerant circuit to bypass to an inlet side of the compressor; a cooler provided on a route of the branching piping for cooling and configured to cool by using a part of the refrigerant a power device provided in an electrical circuit configured to control an operation of the compressor by using a part of the refrigerant; a throttle valve provided on only an upstream side of the cooler on the branching piping for cooling; a device temperature detector configured to detect a temperature of the power device; and a control unit configured to control to open or close the throttle valve according to a detected temperature by the device temperature detector.

With the refrigeration cycle device, cooling of the power device is performed according to a temperature of the power device. This prevents overcooling or condensation on the power device. In the refrigeration cycle device, in particular, the operating component for cooling the power device is the throttle valve alone provided on only the upstream side of the cooler. This simplifies configuration, thereby reducing causes of failure and possibility of failure. In addition, in the refrigeration cycle device, the operating component for cooling the power device is the throttle valve alone provided on only the upstream side of the cooler. This configuration does not increase a temperature of the refrigerant at the outlet of the heat exchangers serving as condensers, thereby preventing deterioration of operational efficiency.

A refrigeration cycle device according to a second aspect of the present invention is the first aspect of the present invention, further including an air temperature detector configured to detect a temperature of ambient air subject to heat exchange by the heat-source-side heat exchanger, in which the control unit is configured to control to open the throttle valve according to a detected temperature by the device temperature detector or a detected temperature by the air temperature detector; and the control unit is configured to control to close the throttle valve according to a detected temperature by the device temperature detector and a detected temperature by the air temperature detector.

With the refrigeration cycle device, the throttle valve is controlled according to a detected temperature by the air temperature detector in addition to a detected temperature by the device temperature detector. This operation securely performs cooling of the power device, and securely prevents overcooling or condensation on the power device.

A refrigeration cycle device according to a third aspect of the present invention is the first or second aspect of the present invention, in which the throttle valve is an on-off valve.

With the refrigeration cycle device, the throttle valve is the on-off valve, thereby simplifying the configuration and thus reducing failures. This brings an obvious effect resulting from the simplified configuration and reduced possibility of failure.

A refrigeration cycle device according to a fourth aspect of the present invention is the third aspect of the present invention, including a fixed throttle provided in parallel with the throttle valve on an upstream side of the cooler on the branching piping for cooling.

In the refrigeration cycle device, the fixed throttle is provided in parallel with the throttle valve. This configuration allows refrigerant to circulate through the branching piping for cooling even in a case where the throttle valve is closed. This prevents excessive increased temperature of the power device, an electrical circuit including the power device, and a control box including the electrical circuit.

A refrigeration cycle device according to a fifth aspect of the present invention is the first aspect of the present invention, in which the throttle valve is an expansion valve.

With the refrigeration cycle device, the throttle valve is an expansion valve, thereby accurately adjusting a temperature of the power device.

A refrigeration cycle device according to a sixth aspect of the present invention is any one of the first to fifth aspect of the present invention, including a fixed throttle provided on a downstream side of the cooler on the branching piping for cooling.

In the refrigeration cycle device, the fixed throttle is provided on the downstream side of the cooler. This configuration increases a pressure of the compressor at the inlet side on the downstream side of the cooler, thereby increasing a temperature of the cooler, and thus preventing condensation.

A refrigeration cycle device according to a seventh aspect of the present invention is any one of the first to sixth aspect of the present invention, including a fixed throttle provided on an upstream side of the cooler on the branching piping for cooling and a downstream side of the throttle valve.

In the refrigeration cycle device, the fixed throttle is provided on the upstream side of the cooler and the downstream side of the throttle valve. This configuration achieves a fixed turndown in a liquid phase, thereby effectively adjusting to a suitable flow rate. The fixed throttle reduces a pressure at the cooler to a value lower than an inlet pressure. This also reduces a temperature of the refrigerant, thereby generating a difference in temperature from the power device, which increases a cooling effect.

A refrigeration cycle device according to an eighth aspect of the present invention is any one of the first to seventh aspect of the present invention, including a subcooling circuit including: a branching piping for subcooling configured to allow a part of refrigerant between the heat exchangers in the refrigerant circuit to bypass to an inlet side of the compressor; an expansion valve for subcooling provided on the branching piping for subcooling, the electronic expansion valve for subcooling configured to expand a part of the refrigerant; and a subcooling heat exchanger provided on a downstream side of the electronic expansion valve for subcooling on the branching piping for subcooling, the subcooling heat exchanger configured to cause the refrigerant that has passed through the electronic expansion valve for subcooling and the refrigerant in the refrigerant circuit to exchange heat, wherein the branching piping for cooling is provided to a position to introduce a part of the refrigerant, nearer to the utilization-side heat exchanger than the subcooling circuit.

In the refrigeration cycle device, the refrigerant is introduced from a side nearer to the utilization-side heat exchanger than the subcooling circuit, thereby applying subcooling to the refrigerant of the cooler. At an identical pressure, the refrigerant to which more subcooling has been applied is in a state of a low enthalpy (state of being further cooled) as refrigerant, in comparison with a state of lower subcooling. This increases a cooling effect when the refrigerant is introduced to the cooler.

### Effect of Invention

According to the present invention, configuration can be simplified and deterioration of operational efficiency is suppressed, while overcooling or condensation on a power device can be prevented.

### Brief Description of the Drawings

FIG. 1 is a refrigerant circuit diagram of a refrigeration cycle device according to an embodiment of the present invention.
FIG. 2 is an enlarged view of a cooling device of a refrigeration cycle device according to a first embodiment of the present invention.
FIG. 3 is an enlarged view of the cooling device of the refrigeration cycle device according to the first embodiment of the present invention.
FIG. 4 is an enlarged view of the cooling device of the refrigeration cycle device according to the first embodiment of the present invention.
FIG. 5 is an enlarged view of the cooling device of the refrigeration cycle device according to the first embodiment of the present invention.
FIG. 6 is an enlarged view of a cooling device of a refrigeration cycle device according to a second embodiment of the present invention.
FIG. 7 is an enlarged view of a cooling device of a refrigeration cycle device according to the second embodiment of the present invention.
FIG. 8 is an enlarged view of the cooling device of the refrigeration cycle device according to the second embodiment of the present invention.
FIG. 9 is another example refrigerant circuit diagram of a refrigeration cycle device according to an embodiment of the present invention.

### Description of the Preferred Embodiments

Embodiments according to the present invention will be described below on the basis of the drawings. Note that the present invention is not limited by these embodiments. In addition, the constituent elements in the embodiments described below include those that can be easily replaced by a person skilled in the art or those that are substantially the same.

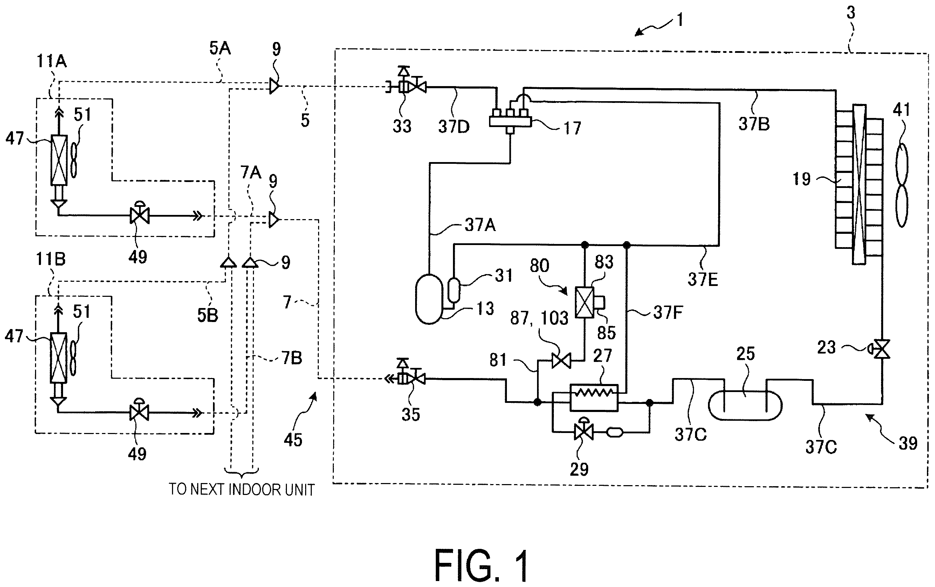

FIG. 1 is a refrigerant circuit diagram of a refrigeration cycle device according to the present embodiment.

FIG. 1 illustrates a multiple-type air conditioner 1 as an example to which the refrigeration cycle device is applied. The refrigeration cycle device can be applied to a heat pump, which is not illustrated in the drawing. The multiple-type air conditioner 1 includes a single outdoor unit 3, gas-side piping 5 and liquid-side piping 7 that are led from the outdoor unit 3, and a plurality of indoor units 11A and 11B connected in parallel via branching devices 9 between the gas-side piping 5 and the liquid-side piping 7.

The outdoor unit 3 includes a compressor 13 that is driven by an inverter and that compresses refrigerant, a four-way selector valve 17 that selects a circulation direction of the refrigerant, an outdoor heat exchanger 19 as a heat-source-side heat exchanger that causes the refrigerant and outside air to exchange heat, an outdoor electronic expansion valve for heating (EEVH) 23, a receiver 25 that stores liquid refrigerant, a subcooling heat exchanger 27 that applies subcooling to the liquid refrigerant, an electronic expansion valve for subcooling (EEVSC) 29 that controls a refrigerant amount to be branched to the subcooling heat exchanger 27, an accumulator 31 that separates a liquid portion from refrigerant gas to be suctioned into the compressor 13 and allows only a gas portion to be suctioned by the compressor 13, a gas-side operation valve 33, and a liquid-side operation valve 35.

Each of the above-described devices on the outdoor unit 3 side is connected as in the related art via refrigerant piping, such as discharge piping 37A, gas piping 37B, liquid piping 37C, gas piping 37D, intake piping 37E, and branching piping for subcooling 37F for subcooling, and thus configures an outdoor refrigerant circuit 39. Further, an outdoor fan 41 that blows outside air to the outdoor heat exchanger 19 is provided to the outdoor unit 3.

The gas-side piping 5 and the liquid-side piping 7 are refrigerant piping connected to the gas-side operation valve 33 and the liquid-side operation valve 35 of the outdoor unit 3. The lengths of the gas-side piping 5 and the liquid-side piping 7 are set as appropriate in accordance with a distance between the outdoor unit 3 and each of the indoor units 11A and 11B connected to the outdoor unit 3 during onsite installation work. An appropriate number of the branching devices 9 are disposed midway on the gas-side piping 5 and the liquid-side piping 7, and an appropriate number of the indoor units 11A and 11B are each connected via the branching devices 9. As a result, a refrigeration cycle 45 of one hermetically sealed system is configured.

The indoor units 11A and 11B each include an indoor heat exchanger 47 as a utilization-side heat exchanger that causes the refrigerant and inside air to exchange heat and thus performs indoor air conditioning, an indoor electronic expansion valve for cooling (EEVC) 49, and an indoor fan 51 that circulates the inside air via the indoor heat exchanger 47. The indoor units 11A and 11B are connected to the branching devices 9 via branched gas-side piping 5A and 5B and branched liquid-side piping 7A and 7B on the indoor side.

In the above-described multiple-type air conditioner 1, the heating operation is performed as follows. The high-temperature, high-pressure refrigerant gas that has been compressed by the compressor 13 is discharged to the discharge piping 37A. The refrigerant is then circulated to the gas piping 37D side by the four-way selector valve 17. This refrigerant is led out from the outdoor unit 3 via the gas-side operation valve 33 and the gas-side piping 5, and is further introduced into the indoor units 11A and 11B via the branching devices 9 and the branched gas-side piping 5A and 5B on the indoor side.

The high-temperature, high-pressure refrigerant gas introduced into the indoor units 11A and 11B is subjected to heat exchange with the inside air circulated by the indoor fan 51. The inside air is thus heated and provided for indoor heating. The refrigerant is condensed and reaches the branching device 9 via the indoor electronic expansion valve (EEVC) 49 and the branched liquid-side piping 7A and 7B. Then, the refrigerant is merged with the refrigerant from other indoor units, and is subsequently returned to the outdoor unit 3 via the liquid-side piping 7.

The refrigerant that has returned to the outdoor unit 3 reaches the subcooling heat exchanger 27 via the liquid-side operation valve 35 and the liquid piping 37C. The refrigerant is subjected to subcooling in the same manner as during cooling, and then introduced into the receiver 25, where the circulation amount of the refrigerant is adjusted by being temporarily stored. This liquid refrigerant is supplied to the outdoor electronic expansion valve (EEVH) 23 via the liquid piping 37C. The liquid refrigerant is then adiabatically expanded, and subsequently introduced into the outdoor heat exchanger 19.

In the outdoor heat exchanger 19, heat is exchanged between the refrigerant and the outside air blown from the outdoor fan 41, and the refrigerant absorbs the heat from the outside air and is evaporated and gasified. This refrigerant passes through the gas piping 37B, the four-way selector valve 17, and the intake piping 37E from the outdoor heat exchanger 19. This refrigerant is then merged with the refrigerant from the branching piping for subcooling 37F and is subsequently introduced into the accumulator 31. In the accumulator 31, the liquid portion contained in the refrigerant gas is separated, and only the gas portion is suctioned into the compressor 13 and once again compressed in the compressor 13. The heating operation is performed by repeating the cycle described above.

On the other hand, the cooling operation is performed as follows. The high-temperature, high-pressure refrigerant gas that has been compressed in the compressor 13 is discharged to the discharge piping 37A. Subsequently, the refrigerant gas is circulated toward the gas piping 37B side by the four-way selector valve 17. The refrigerant gas is then subjected to heat exchange with the outside air blown by the outdoor fan 41 to be condensed and liquefied in the outdoor heat exchanger 19. This liquid refrigerant passes through the outdoor electronic expansion valve 23 and is temporarily stored in the receiver 25.

The liquid refrigerant for which the circulation amount has been adjusted by the receiver 25 is partially diverted into the branching piping for subcooling 37F in the process of flowing through the subcooling heat exchanger 27 via the liquid piping 37C. The liquid refrigerant is then subjected to heat exchange with the refrigerant adiabatically expanded by the electronic expansion valve for subcooling (EEVSC) 29, thereby imparting the degree of subcooling to the liquid refrigerant. This liquid refrigerant is introduced from the outdoor unit 3 to the liquid-side piping 7 via the liquid-side operation valve 35. The liquid refrigerant introduced to the liquid-side piping 7 is further diverted to the branched liquid-side piping 7A and 7B of each of the indoor units 11A and 11B via the branching devices 9.

The liquid refrigerant diverted to the branched liquid-side piping 7A and 7B flows into each of the indoor units 11A and 11B. The liquid refrigerant is adiabatically expanded by the indoor electronic expansion valve (EEVC) 49 to form a gas-liquid two-phase flow, and is then introduced into the indoor heat exchanger 47. In the indoor heat exchanger 47, the refrigerant that has turned to a gas-liquid two-phase flow is subject to heat exchange with the inside air circulated by the indoor fan 51. The inside air is thus cooled and provided for indoor cooling. On the other hand, the refrigerant is gasified and flows to the branching device 9 via the branched gas-side piping 5A and 5B. The refrigerant is merged with the refrigerant gas from other indoor units in the gas-side piping 5.

The refrigerant gas merged in the gas-side piping 5 is returned once again to the outdoor unit 3 side and reaches the intake piping 37E via the gas-side operation valve 33, the gas piping 37D, and the four-way selector valve 17. The refrigerant gas is then merged with the refrigerant gas from the branching piping for subcooling 37F. The merged gas is subsequently introduced into the accumulator 31. In the accumulator 31, the liquid portion contained in the refrigerant gas is separated, and only the gas portion is suctioned into the compressor 13. This refrigerant is once again compressed in the compressor 13. The cooling operation is performed by repeating the cycle described above. In the above-described manner, the refrigerant circuit is configured to circulate the refrigerant in the multiple-type air conditioner 1 as a refrigeration cycle device.

In such a refrigeration cycle device, an electrical circuit such as an inverter circuit is provided to control an operation of the compressor 13. The electrical circuit is cooled by the cooling device. The following describes some embodiments of a cooling device that cools an electrical circuit.

### First Embodiment

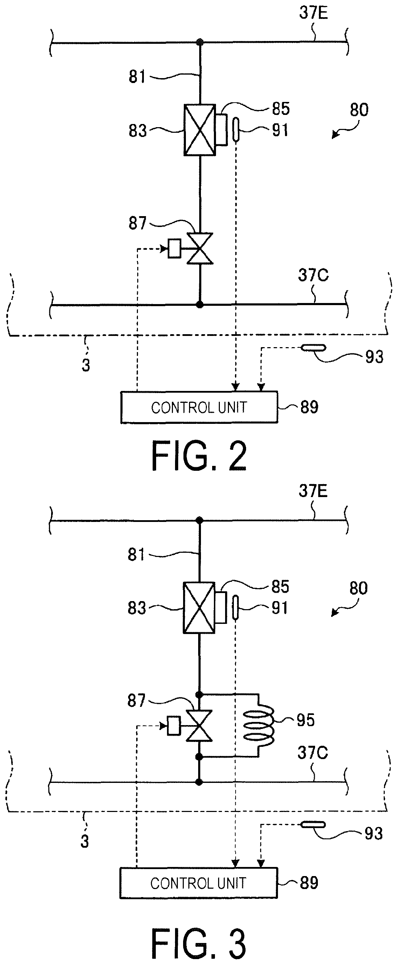

FIGS. 2 to 5 are enlarged views of a cooling device in a refrigeration cycle device according to the present embodiment.

As illustrated in FIG. 2, a cooling device 80 includes a branching piping for cooling 81, a refrigerant jacket (a cooler) 83, a throttle valve 87, a control unit 89, a device temperature detector 91, and an air temperature detector 93.

The branching piping for cooling 81, as illustrated in FIG. 1, in the above-described outdoor unit 3, bypasses the liquid piping 37C provided between the heat exchangers 19 and 47 to connect the outdoor heat exchanger 19 and the indoor heat exchanger 47, and the intake piping 37E connected to the inlet side of the compressor 13. That is, the branching piping for cooling 81 allows a part of liquid refrigerant between the heat exchangers 19 and 47 in the refrigerant circuit to bypass to the inlet side of the compressor 13.

The refrigerant jacket 83 is provided on the route of the branching piping for cooling 81 and includes a high heat-transferability aluminum block, for example. In the refrigerant jacket 83, the branching piping for cooling 81 is provided so as to pass through therein. To the refrigerant jacket 83, a power device 85 provided in an electrical circuit is attached. The refrigerant jacket 83 cools the power device 85 by using a part of the liquid refrigerant that has bypassed.

The throttle valve 87 is provided alone on only the upstream side of the refrigerant jacket 83 on the branching piping for cooling 81. In the present embodiment, the throttle valve 87 is an on-off valve (a solenoid valve) configured to open or close the branching piping for cooling 81 on the upstream side of the refrigerant jacket 83.

The control unit 89 controls to open or close the throttle valve 87. The control unit 89 inputs a detected temperature by the device temperature detector 91 or the air temperature detector 93 and controls the throttle valve 87 according to the input.

The device temperature detector 91 detects a temperature of the power device 85. The device temperature detector 91 is attached on a surface of the power device 85 and detects a surface temperature of the power device 85. Alternatively, the device temperature detector 91 is attached near the power device 85 and detects a temperature generated from the surface of the power device 85.

The air temperature detector 93 detects an outdoor temperature that is an external temperature of the outdoor unit 3 and a temperature of ambient air subject to heat exchange by the outdoor heat exchanger 19. The air temperature detector 93 is sometimes not used to control the throttle valve 87 by the control unit 89.

In the control unit 89, a set temperature for controlling to open the throttle valve 87 and a set temperature for controlling to close the throttle valve 87 are stored beforehand in a storage unit (not illustrated). For example, an upper limit set temperature for controlling to open the throttle valve 87 according to a detected temperature by the device temperature detector 91 is 50°C. A lower limit set temperature for controlling to close the throttle valve 87 according to a detected temperature by the device temperature detector 91 is 45°C. For example, the upper limit set temperature for controlling to open the throttle valve 87 according to a detected temperature by the air temperature detector 93 is 35°C. The lower limit set temperature for controlling to close the throttle valve 87 according to a detected temperature by the air temperature detector 93 is 30°C.

The following describes a control of the throttle valve 87 by the control unit 89. When the throttle valve 87 is controlled according to a detected temperature by the device temperature detector 91, the control unit 89 controls to open the throttle valve 87 when a detected temperature by the device temperature detector 91 is the upper limit set temperature. On the other hand, the control unit 89 controls to close the throttle valve 87 when a detected temperature by the device temperature detector 91 is the lower limit set temperature.

This operation allows the throttle valve 87 to open when a detected temperature by the device temperature detector 91 is the upper limit set temperature. This flows the liquid refrigerant through the branching piping for cooling 81 so as to pass through the refrigerant jacket 83, thereby cooling the power device 85. On the other hand, the throttle valve 87 is closed when a detected temperature by the device temperature detector 91 is the lower limit set temperature. This does not flow the liquid refrigerant through the branching piping for cooling 81, thereby not cooling the power device 85. This prevents overcooling or condensation.

When the throttle valve 87 is controlled according to a detected temperature by the device temperature detector 91 and a detected temperature by the air temperature detector 93, the control unit 89 controls to open the throttle valve 87 when a detected temperature by the device temperature detector 91 is the upper limit set temperature, or a detected temperature by the air temperature detector 93 is the upper limit set temperature. On the other hand, the control unit 89 controls to close the throttle valve 87, when a detected temperature by the device temperature detector 91 is the lower limit set temperature, and a detected temperature by the air temperature detector 93 is the lower limit set temperature.

This operation allows the throttle valve 87 to open when a detected temperature by the device temperature detector 91 is the upper limit set temperature, or a detected temperature by the air temperature detector 93 is the upper limit set temperature. This flows the liquid refrigerant through the branching piping for cooling 81 so as to pass through the refrigerant jacket 83, thereby cooling the power device 85. On the other hand, the throttle valve 87 is closed when a detected temperature by the device temperature detector 91 is the lower limit set temperature, and a detected temperature by the air temperature detector 93 is the lower limit set temperature. This does not flow the liquid refrigerant through the branching piping for cooling 81, thereby not cooling the power device 85. This prevents overcooling or condensation.

As described above, the refrigeration cycle device according to the present embodiment includes the refrigeration cycle (the refrigerant circuit) 45 including the compressor 13, the outdoor heat exchanger (the heat-source-side heat exchanger) 19, the expansion valves 23 and 49, and the indoor heat exchanger (the utilization-side heat exchanger) 47 connected via the piping (the discharge piping 37A, the gas piping 37B, the liquid piping 37C, the gas piping 37D, the intake piping 37E, the gas-side piping 5, the branched gas-side piping 5A and 5B, the liquid-side piping 7, the branched liquid-side piping 7A and 7B). The refrigeration cycle 45 allows the refrigerant to circulate. The refrigeration cycle device also includes the branching piping for cooling 81 that allows a part of liquid refrigerant between the heat exchangers 19 and 47 in the refrigeration cycle 45 to bypass to the inlet side of the compressor 13. The refrigeration cycle device also includes the refrigerant jacket (the cooler) 83 provided on the route of the branching piping for cooling 81 and configured to cool the power device 85 provided in the electrical circuit configured to control an operation of the compressor 13. The refrigeration cycle device further includes the throttle valve 87 provided on only the upstream side of the refrigerant jacket 83 on the branching piping for cooling 81. The refrigeration cycle device still further includes the device temperature detector 91 that detects a temperature of the power device 85, and the control unit 89 that controls to open or close the throttle valve 87 according to a detected temperature by the device temperature detector 91.

With the refrigeration cycle device, cooling of the power device 85 is performed according to a temperature of the power device 85. This prevents overcooling or condensation on the power device 85. In the refrigeration cycle device, in particular, the operating component for cooling the power device 85 is the throttle valve 87 alone provided on only the upstream side of the refrigerant jacket 83. This simplifies configuration, thereby reducing causes of failure and possibility of failure. In addition, in the refrigeration cycle device, the operating component for cooling the power device 85 is the throttle valve 87 provided on only the upstream side of the refrigerant jacket 83. This configuration does not increase a temperature of the refrigerant at the outlet of the heat exchangers 19 and 47 serving as condensers, thereby preventing deterioration of operational efficiency.

The refrigeration cycle device according to the present embodiment further includes the air temperature detector 93 that detects a temperature of ambient air subject to heat exchange by the outdoor heat exchanger 19. The control unit 89 controls to open the throttle valve 87 according to a detected temperature by the device temperature detector 91 or a detected temperature by the air temperature detector 93. The control unit 89 controls to close the throttle valve 87 according to a detected temperature by the device temperature detector 91 and a detected temperature by the air temperature detector 93.

With the refrigeration cycle device, the throttle valve 87 is controlled according to a detected temperature by the air temperature detector 91 in addition to a detected temperature by the device temperature detector 93. This operation securely performs cooling of the power device 85, and securely prevents overcooling or condensation on the power device 85.

In the refrigeration cycle device according to the present embodiment, the throttle valve 87 includes the on-off valve.

With the refrigeration cycle device, the throttle valve 87 is the on-off valve, thereby simplifying the configuration and thus reducing failures. This brings an obvious effect resulting from the simplified configuration and reduced possibility of failure.

In the refrigeration cycle device according to the present embodiment, as illustrated in FIG. 3, the fixed throttle 95 is preferably provided in parallel with the throttle valve 87 on the upstream side of the refrigerant jacket 83 on the branching piping for cooling 81.

The fixed throttle 95 is a contracting portion having a fixed turndown amount, such as a capillary tube.

In the refrigeration cycle device, the fixed throttle 95 is provided in parallel with the throttle valve 87. This configuration allows the liquid refrigerant to circulate through the branching piping for cooling 81 even in a case where the throttle valve 87 is closed. This prevents excessive increased temperature of the power device 85, the electrical circuit including the power device 85, and a control box including the electrical circuit.

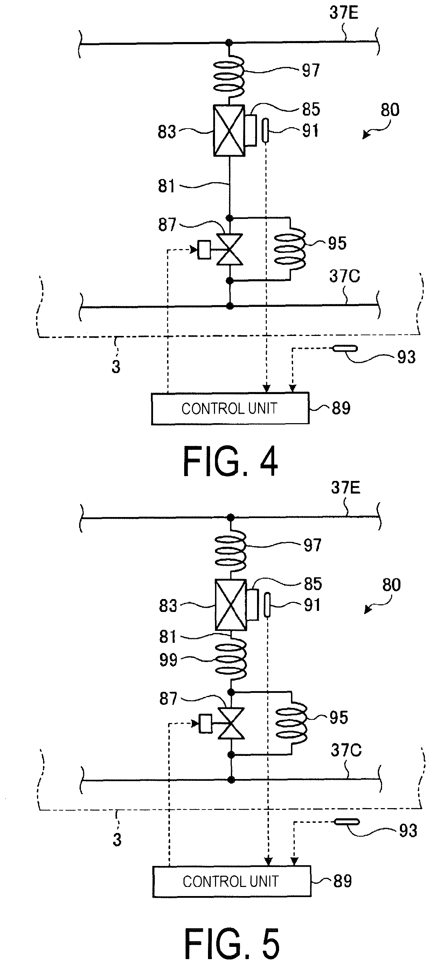

In the refrigeration cycle device according to the present embodiment, as illustrated in FIG. 4, the fixed throttle 97 is preferably provided on the downstream side of the refrigerant jacket 83 on the branching piping for cooling 81.

The fixed throttle 97 is a contracting portion having a fixed turndown amount, such as a capillary tube.

In the refrigeration cycle device, the fixed throttle 97 is provided on the downstream side of the refrigerant jacket 83. This configuration increases a pressure of the compressor 13 at the inlet side on the downstream side of the refrigerant jacket 83, thereby increasing a temperature of the refrigerant jacket 83, and thus preventing condensation. FIG. 4 illustrates an example in which the fixed throttle 97 is provided together with the fixed throttle 95. This configuration brings an effect resulting from the provision of the fixed throttle 95. However, for another configuration, the fixed throttle 95 may not be included.

In the refrigeration cycle device according to the present embodiment, as illustrated in FIG. 5, the fixed throttle 99 is preferably provided on the upstream side of the refrigerant jacket 83 on the branching piping for cooling 81 and the downstream side of the throttle valve 87.

The fixed throttle 99 is a contracting portion having a fixed turndown amount, such as a capillary tube.

In the refrigeration cycle device, the fixed throttle 99 is provided on the upstream side of the refrigerant jacket 83 and the downstream side of the throttle valve 87. This configuration achieves a fixed turndown in a liquid phase, thereby effectively adjusting to a suitable flow rate. The fixed throttle 99 reduces a pressure at the refrigerant jacket 83 to a value lower than an inlet pressure. This also reduces a temperature of the refrigerant, thereby generating a difference in temperature from the power device 85, which increases a cooling effect. Although it depends on the phase state of the refrigerant, the refrigerant is in a liquid phase on the upstream side of the refrigerant jacket 83 (alternatively, in a two-phase state nearly liquid). On the downstream side, the refrigerant is heated up to be in a gas phase or in a two-phase state nearly gas. In a liquid phase, refrigerant density is larger than that in a two-phase state. In a gas phase, refrigerant density is smaller than a two-phase state (volume increases as density decreases with an identical mass). Therefore, in a liquid phase on the upstream side, the throttle valve 87 with a small diameter (size) can achieve sufficient turning down effect. In a gas phase on the downstream side, the size of the throttle valve 87 is increased. The throttle valve 87 in a small size applies an excessive pressure loss, whereby insufficient refrigerant flows for cooling. In order to achieve both a sufficient cooling effect and a turning down effect at a low cost, attaching the throttle valve 87 on the upstream side of the refrigerant jacket 83 is preferred such that the turning down effect can be achieved with a small-sized valve. When the throttle valve 87 is provided on the upstream and the fixed throttle 99 is provided on the downstream side, because the fixed throttle 99 that is a capillary tube itself is piping, it costs significantly lower than a larger-sized valve. This achieves a turning down effect at a low cost. FIG. 5 illustrates an example in which the fixed throttle 99 is provided together with the fixed throttle 95 and the fixed throttle 97. This configuration brings an effect resulting from the provision of the fixed throttle 95 and the fixed throttle 97. However, for another configuration, at least one of the fixed throttle 95 and the fixed throttle 97 may not be included.

### Second Embodiment

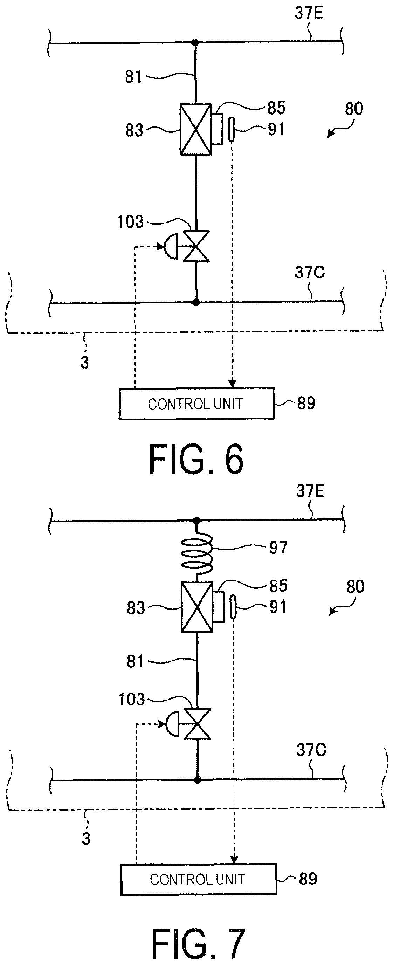

FIGS. 6 to 8 are enlarged views of a cooling device in a refrigeration cycle device according to the present embodiment.

As illustrated in FIG. 6, the cooling device 80 includes the branching piping for cooling 81, the refrigerant jacket (the cooler) 83, a throttle valve 103, the control unit 89, and the device temperature detector 91.

The branching piping for cooling 81, as illustrated in FIG. 1, in the above-described outdoor unit 3, bypasses the liquid piping 37C provided between the heat exchangers 19 and 47 to connect the outdoor heat exchanger 19 and the indoor heat exchanger 47, and the intake piping 37E connected to the inlet side of the compressor 13. That is, the branching piping for cooling 81 allows a part of liquid refrigerant between the heat exchangers 19 and 47 in the refrigerant circuit to bypass to the inlet side of the compressor 13.

The refrigerant jacket 83 is provided on the route of the branching piping for cooling 81 and includes a high heat-transferability aluminum block, for example. In the refrigerant jacket 83, the branching piping for cooling 81 is provided so as to pass through therein. To the refrigerant jacket 83, a power device 85 provided in an electrical circuit is attached. The refrigerant jacket 83 cools the power device 85 by using the part of liquid refrigerant that has bypassed.

The throttle valve 103 is provided alone on only the upstream side of the refrigerant jacket 83 on the branching piping for cooling 81. In the present embodiment, the throttle valve 103 is an expansion valve capable of adjusting a degree of opening of the branching piping for cooling 81 on the upstream side of the refrigerant jacket 83.

The control unit 89 controls to open or close the throttle valve 103 by changing the degree of opening. The control unit 89 inputs a detected temperature by the device temperature detector 91 and controls the throttle valve 103 according to the input.

The device temperature detector 91 detects a temperature of the power device 85. The device temperature detector 91 is attached on a surface of the power device 85 and detects a surface temperature of the power device 85. Alternatively, the device temperature detector 91 is attached near the power device 85 and detects a temperature generated from the surface of the power device 85.

In the control unit 89, a target temperature for controlling to open or close the throttle valve 103 is stored beforehand in the storage unit (not illustrated). For example, the target temperature for controlling to open or close the throttle valve 103 according to a detected temperature by the device temperature detector 91 is 60°C. For example, the target temperature for controlling to open or close the throttle valve 103 according to a detected temperature by the air temperature detector 93 is 35°C.

The following describes a control of the throttle valve 103 by the control unit 89. When the throttle valve 103 is controlled according to a detected temperature by the device temperature detector 91, the control unit 89 controls to open the throttle valve 103 when a detected temperature by the device temperature detector 91 exceeds the target temperature so that the detected temperature reaches the target temperature. On the other hand, the control unit 89 controls to close the throttle valve 103 when a detected temperature by the device temperature detector 91 is lower than the target temperature.

Therefore, this operation increases the flow of the liquid refrigerant through the branching piping for cooling 81 when the throttle valve 103 is controlled to be opened. The increased liquid refrigerant passes through the refrigerant jacket 83, thereby decreasing a temperature of the power device 85. On the other hand, the flow of the liquid refrigerant through the branching piping for cooling 81 is decreased when the throttle valve 103 is controlled to be closed. The decreased liquid refrigerant passes through the refrigerant jacket 83, thereby increasing a temperature of the power device 85. Therefore, a temperature of the power device 85 can be adjusted to a target temperature, thereby preventing overcooling or condensation.

As described above, the refrigeration cycle device according to the present embodiment includes the refrigeration cycle (the refrigerant circuit) 45 including the compressor 13, the outdoor heat exchanger (the heat-source-side heat exchanger) 19, the expansion valves 23 and 49, and the indoor heat exchanger (the utilization-side heat exchanger) 47 connected via the piping (the discharge piping 37A, the gas piping 37B, the liquid piping 37C, the gas piping 37D, the intake piping 37E, the gas-side piping 5, and the liquid-side piping 7). The refrigeration cycle 45 allows the refrigerant to circulate. The refrigeration cycle device also includes the branching piping for cooling 81 that allows a part of liquid refrigerant between the heat exchangers 19 and 47 in the refrigeration cycle 45 to bypass to the inlet side of the compressor 13. The refrigeration cycle device also includes the refrigerant jacket (the cooler) 83 provided on the route of the branching piping for cooling 81 and configured to cool the power device 85 provided in the electrical circuit configured to control an operation of the compressor 13. The refrigeration cycle device further includes the throttle valve 103 provided on only the upstream side of the refrigerant jacket 83 on the branching piping for cooling 81. The refrigeration cycle device still further includes the device temperature detector 91 that detects a temperature of the power device 85, and the control unit 89 that controls to open or close the throttle valve 103 according to a detected temperature by the device temperature detector 91.

With the refrigeration cycle device, cooling of the power device 85 is performed according to a temperature of the power device 85. This prevents overcooling or condensation on the power device 85. In the refrigeration cycle device, in particular, the operating component for cooling the power device 85 is the throttle valve 103 alone provided on only the upstream side of the refrigerant jacket 83. This simplifies configuration, thereby reducing causes of failure and possibility of failure. In addition, in the refrigeration cycle device, the operating component for cooling the power device 85 is the throttle valve 103 alone provided on only the upstream side of the refrigerant jacket 83. This configuration does not increase a temperature of the refrigerant at the outlet of the heat exchangers 19 and 47 serving as condensers, thereby preventing deterioration of operational efficiency.

In the refrigeration cycle device according to the present embodiment, the throttle valve 103 includes the on-off valve.

With the refrigeration cycle device, the throttle valve 103 is an expansion valve, thereby accurately adjusting a temperature of the power device 85.

In the refrigeration cycle device according to the present embodiment, as illustrated in FIG. 7, the fixed throttle 97 is preferably provided on the downstream side of the refrigerant jacket 83 on the branching piping for cooling 81.

The fixed throttle 97 is a contracting portion having a fixed turndown amount, such as a capillary tube.

In the refrigeration cycle device, the fixed throttle 97 is provided on the downstream side of the refrigerant jacket 83. This configuration increases a pressure of the compressor 13 at the inlet side on the downstream side of the refrigerant jacket 83, thereby increasing a temperature of the refrigerant jacket 83, and thus preventing condensation.

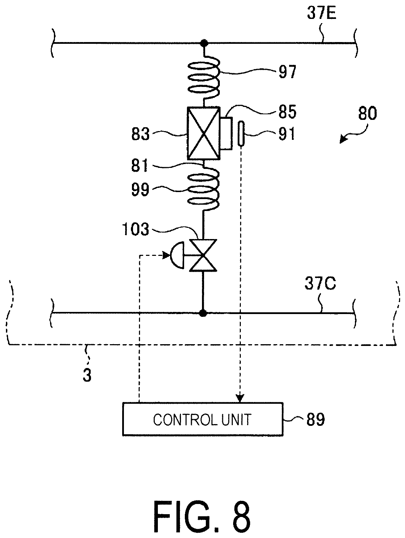

In the refrigeration cycle device according to the present embodiment, as illustrated in FIG. 8, providing the fixed throttle 99 is preferred on the upstream side of the refrigerant jacket 83 on the branching piping for cooling 81 and the downstream side of the throttle valve 103.

The fixed throttle 99 is a contracting portion having a fixed turndown amount, such as a capillary tube.

In the refrigeration cycle device, the fixed throttle 99 is provided on the upstream side of the refrigerant jacket 83 and the downstream side of the throttle valve 103. This configuration achieves a fixed turndown in a liquid phase, thereby effectively adjusting to a suitable flow rate. The fixed throttle 99 reduces a pressure at the refrigerant jacket 83 to a value lower than an inlet pressure. This also reduces a temperature of the refrigerant, thereby generating a difference in temperature from the power device 85, which increases a cooling effect. Although it depends on the phase state of the refrigerant, the refrigerant is in a liquid phase on the upstream side of the refrigerant jacket 83 (alternatively, in a two-phase state nearly liquid). On the downstream side, the refrigerant is heated up to be in a gas phase or in a two-phase state nearly gas. In a liquid phase, refrigerant density is larger than that in a two-phase state. In a gas phase, refrigerant density is smaller than a two-phase state (volume increases as density decreases with an identical mass). Therefore, in a liquid phase on the upstream side, the throttle valve 103 with a small diameter (size) can sufficiently achieve turning down effect. In a gas phase on the downstream side, the size of the throttle valve 103 is increased. The throttle valve 87 in a small size applies an excessive pressure loss, whereby insufficient refrigerant flows for cooling. In order to achieve both a sufficient cooling effect and a turning down effect at a low cost, attaching the throttle valve 103 on the upstream side of the refrigerant jacket 83 is preferred such that turning down effect is effectively achieved with a small-sized valve. When the throttle valve 103 is provided on the upstream and the fixed throttle 99 is provided on the downstream side, because the fixed throttle 99 that is a capillary tube itself is piping, it costs significantly lower than a larger-sized valve. This achieves a turning down effect at a low cost. FIG. 8 illustrates an example in which the fixed throttle 99 is provided together with the fixed throttle 97. This configuration brings an effect resulting from the provision of the fixed throttle 97. However, for another configuration, the fixed throttle 97 may not be included.

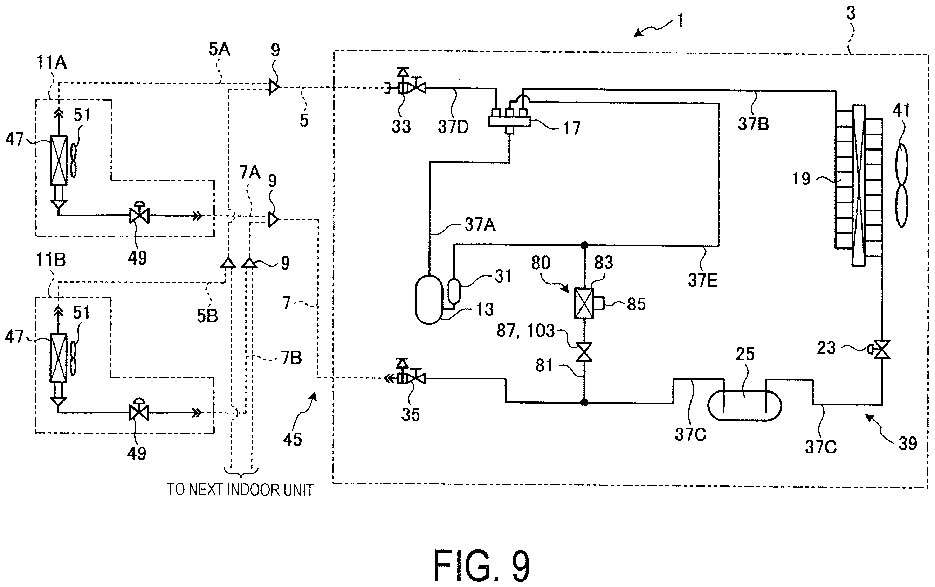

FIG. 9 is another example refrigerant circuit diagram of a refrigeration cycle device according to the present embodiment. The refrigeration cycle device illustrated in FIG. 1 includes a subcooling circuit including the subcooling heat exchanger 27, the electronic expansion valve for subcooling 29, and the branching piping for subcooling 37F. In the refrigeration cycle device illustrated in FIG. 1, the branching piping for cooling 81 is connected to the liquid piping 37C at a position nearer to the indoor heat exchanger 47 than the position at which the branching piping for subcooling 37F is connected and nearer to the liquid-side operation valve 35. The refrigeration cycle device illustrated in FIG. 9 does not include the subcooling circuit including the subcooling heat exchanger 27, the electronic expansion valve for subcooling 29, and the branching piping for subcooling 37F. The liquid piping 37C is connected regardless of the subcooling circuit.

The refrigeration cycle device illustrated in FIG. 9 includes a subcooling circuit including: the branching piping for subcooling 37F that allows a part of liquid refrigerant between the heat exchangers 19 and 47 in the refrigeration cycle (refrigerant circuit) 45 to bypass to the inlet side of the compressor 13; the electronic expansion valve for subcooling 29 that is provided on the branching piping for subcooling 37F and is configured to expand a part of the liquid refrigerant; and the subcooling heat exchanger 27 that is provided on a downstream side of the electronic expansion valve for subcooling 29 on the branching piping for subcooling 37F and configured to cause the liquid refrigerant that has passed through the electronic expansion valve for subcooling 29 and the liquid refrigerant in the refrigerant circuit 45 to exchange heat. The branching piping for cooling 81 is provided to a position to introduce a part of the liquid refrigerant, nearer to the indoor heat exchanger 47 than the subcooling circuit.

In the refrigeration cycle device, the refrigerant is introduced from the side nearer to the indoor heat exchanger 47 than the subcooling circuit, thereby applying subcooling to the refrigerant of the refrigerant jacket 83. At an identical pressure, the refrigerant to which more subcooling has been applied is in a state of a low enthalpy (state of being further cooled) as refrigerant, in comparison with a state of lower subcooling. This increases a cooling effect when the refrigerant is introduced to the refrigerant jacket 83.

### Reference Numerals

5 Gas-side piping (piping)
5A, 5B Branched gas-side piping (piping)
7 Liquid-side piping (piping)
7A, 7B Branched liquid-side piping (piping)
13 Compressor
19 Outdoor heat exchanger (heat-source-side heat exchanger)
23 Outdoor electronic expansion valve (expansion valve)
49 Indoor expansion valve (expansion valve)
27 Subcooling heat exchanger
29 Electronic expansion valve for subcooling
37A Discharge piping (piping)
37B Gas piping (piping)
37C Liquid piping (piping)
37D Gas piping (piping)
37E Intake piping (piping)
37F Branching piping for subcooling
45 Refrigerating cycle (refrigerant circuit)
47 Indoor heat exchanger (utilization-side heat exchanger)
80 Cooling device
81 Branching piping for cooling
83 Refrigerant jacket
85 Power device
87 Throttle valve (on-off valve)
89 Control unit
91 Device temperature detector
93 Air temperature detector
95 Fixed throttle
97 Fixed throttle
99 Fixed throttle
103 Throttle valve (expansion valve)

## Claims

1. A refrigeration cycle device, comprising:
a refrigerant circuit comprising a compressor, a heat-source-side heat exchanger, an expansion valve, and a utilization-side heat exchanger connected via piping, the refrigerant circuit being configured to circulate refrigerant;
a branching piping for cooling configured to allow a part of liquid refrigerant between the heat exchangers in the refrigerant circuit to bypass to an inlet side of the compressor;
a cooler provided on a route of the branching piping for cooling and configured to cool by using a part of the refrigerant a power device provided in an electrical circuit configured to control an operation of the compressor;
a throttle valve provided on only an upstream side of the cooler on the branching piping for cooling;
a device temperature detector configured to detect a temperature of the power device; and
a control unit configured to control to open or close the throttle valve according to a detected temperature by the device temperature detector.

2. The refrigeration cycle device according to claim 1, further comprising an air temperature detector configured to detect a temperature of ambient air subject to heat exchange by the heat-source-side heat exchanger, wherein:
the control unit is configured to control to open the throttle valve according to a detected temperature by the device temperature detector or a detected temperature by the air temperature detector; and
the control unit is configured to control to close the throttle valve according to a detected temperature by the device temperature detector and a detected temperature by the air temperature detector.

3. The refrigeration cycle device according to claim 1 or 2, wherein the throttle valve is an on-off valve.

4. The refrigeration cycle device according to claim 3, further comprising a fixed throttle provided in parallel with the throttle valve on an upstream side of the cooler on the branching piping for cooling.

5. The refrigeration cycle device according to claim 1, wherein the throttle valve is an expansion valve.

6. The refrigeration cycle device according to any one of claims 1 to 5, further comprising a fixed throttle provided on a downstream side of the cooler on the branching piping for cooling.

7. The refrigeration cycle device according to any one of claims 1 to 6, further comprising a fixed throttle provided on an upstream side of the cooler on the branching piping for cooling and a downstream side of the throttle valve.

8. The refrigeration cycle device according to any one of claims 1 to 7, further comprising a subcooling circuit comprising:
a branching piping for subcooling configured to allow a part of the refrigerant between the heat exchangers in the refrigerant circuit to bypass to an inlet side of the compressor;
an electronic expansion valve for subcooling provided on the branching piping for subcooling, the electronic expansion valve for subcooling being configured to expand a part of the refrigerant; and
a subcooling heat exchanger provided on a downstream side of the electronic expansion valve for subcooling on the branching piping for subcooling, the subcooling heat exchanger being configured to cause the refrigerant that has passed through the electronic expansion valve for subcooling and the refrigerant in the refrigerant circuit to exchange heat,
wherein the branching piping for cooling is provided to a position to introduce a part of the refrigerant, nearer to the utilization-side heat exchanger than the subcooling circuit.

## Amended claims

### Amended claims under Art. 19.1 PCT

1. [Amended] A refrigeration cycle device, comprising:
a refrigerant circuit comprising a compressor, a heat-source-side heat exchanger, an expansion valve, and a utilization-side heat exchanger connected via piping, the refrigerant circuit being configured to circulate refrigerant;
a branching piping for cooling configured to allow a part of refrigerant between the heat exchangers in the refrigerant circuit to bypass to an inlet side of the compressor;
a cooler provided on a route of the branching piping for cooling and configured to cool by using a part of the refrigerant a power device provided in an electrical circuit configured to control an operation of the compressor;
a throttle valve provided on only an upstream side of the cooler on the branching piping for cooling, the throttle valve being an on-off valve;
a device temperature detector configured to detect a temperature of the power device;
a control unit configured to control to open or close the throttle valve according to a detected temperature by the device temperature detector; and
a fixed throttle provided on a downstream side of the cooler on the branching piping for cooling.

2. [Amended] A refrigeration cycle device, comprising:
a refrigerant circuit comprising a compressor, a heat-source-side heat exchanger, an expansion valve, and a utilization-side heat exchanger connected via piping, the refrigerant circuit being configured to circulate refrigerant;
a branching piping for cooling configured to allow a part of refrigerant between the heat exchangers in the refrigerant circuit to bypass to an inlet side of the compressor;
a cooler provided on a route of the branching piping for cooling and configured to cool by using a part of the refrigerant a power device provided in an electrical circuit configured to control an operation of the compressor;
a throttle valve provided on only an upstream side of the cooler on the branching piping for cooling, the throttle valve being an expansion valve;
a device temperature detector configured to detect a temperature of the power device;
a control unit configured to control to open or close the throttle valve according to a detected temperature by the device temperature detector; and
a fixed throttle provided on a downstream side of the cooler on the branching piping for cooling.

3. [Amended] The refrigeration cycle device according to claim 1 or 2, further comprising an air temperature detector configured to detect a temperature of ambient air subject to heat exchange by the heat-source-side heat exchanger, wherein:
the control unit is configured to control to open the throttle valve according to a detected temperature by the device temperature detector or a detected temperature by the air temperature detector; and
the control unit is configured to control to close the throttle valve according to a detected temperature by the device temperature detector and a detected temperature by the air temperature detector.

4. [Amended] The refrigeration cycle device according to claim 1, further comprising a fixed throttle provided in parallel with the throttle valve on an upstream side of the cooler on the branching piping for cooling.

5. [Removed]

6. [Removed]

7. [Amended] The refrigeration cycle device according to any one of claims 1 to 4, further comprising a fixed throttle provided on an upstream side of the cooler on the branching piping for cooling and a downstream side of the throttle valve.

8. [Amended] The refrigeration cycle device according to any one of claims 1 to 4, and 7, further comprising a subcooling circuit comprising:
a branching piping for subcooling configured to allow a part of the liquid refrigerant between the heat exchangers in the refrigerant circuit to bypass to an inlet side of the compressor;
an electronic expansion valve for subcooling provided on the branching piping for subcooling, the electronic expansion valve for subcooling being configured to expand a part of the refrigerant; and
a subcooling heat exchanger provided on a downstream side of the electronic expansion valve for subcooling on the branching piping for subcooling, the subcooling heat exchanger being configured to cause the refrigerant that has passed through the electronic expansion valve for subcooling and the refrigerant in the refrigerant circuit to exchange heat,
wherein the branching piping for cooling is provided to a position to introduce a part of the refrigerant, nearer to the utilization-side heat exchanger than the subcooling circuit.

Statement under Art. 19.1 PCT
Claim 1 in Scope of Claims is according to claims 1, 3, and 6.

Claim 2 in Scope of Claims is according to claims 1, 5, and 6.

Claim 3 in Scope of Claims is according to claim 2.

Claims 5 and 6 in Scope of Claims are removed.
